# EUROPEAN PATENT APPLICATION

(11) **EP 4 818 680 A1**
(43) Date of publication of application: **07.10.2026**
(21) Application number: 24897225.9
(22) Date of filing: 06.11.2024
(51) Int. Cl.: G01N 21/88, G06F 16/9032, G06Q 50/04, G06T 7/00, G06V 10/70

(54) **VISUAL INSPECTION METHOD AND RATIONALE-GENERATIVE ESTIMATION METHOD USING LARGE VISION¿LANGUAGE MODEL**

(30) Priority: 29.11.2023 JP 2023201449; 15.02.2024 JP 2024020817
(71) Applicant: National University Corporation Tokai National Higher Education and Research System, Nagoya-shi, Aichi 464-8601 (JP)
(72) Inventor: KATO Kunihito, Gifu-shi, Gifu 501-1193 (JP); YAMADA Yusei, Gifu-shi, Gifu 501-1193 (JP); TAKI Yukiya, Gifu-shi, Gifu 501-1193 (JP); OSHITA Takumi, Gifu-shi, Gifu 501-1193 (JP); YOSHIDA Haruto, Gifu-shi, Gifu 501-1193 (JP); UENO Shiryu, Gifu-shi, Gifu 501-1193 (JP); NAKATSUKA Shunsuke, Gifu-shi, Gifu 501-1193 (JP); TERADA Kazunori, Gifu-shi, Gifu 501-1193 (JP); AIZAWA Hiroaki, Higashihiroshima-shi, Hiroshima 739-0024 (JP); HAYASHI Yoshikazu, Gifu-shi, Gifu 501-1193 (JP)
(74) Representative: Office Freylinger
(86) International application number: PCT/JP2024/039341
(87) International publication number: WO 2025/115537

(57) **Abstract**

Provided are a visual inspection method of an article and a rationale-generative estimation method performed using a large vision-language model.

The visual inspection method of an article includes: a pretraining step of performing pretraining on the large vision-language model by inputting information including an image and a sentence to consider context; an additional training step of performing additional training on the large vision-language model by inputting training information of a non-defective product group and training information of a defective product group for a plurality of articles; and an inspection step of inputting an appearance image of an inspection target to the large vision-language model and causing the large vision-language model to output an inspection result. The visual inspection method of an article according to the present invention is characterized in that the training information of the non-defective product group includes an appearance image of a non-defective product and textual information of the non-defective product, the training information of the defective product group includes an appearance image of a defective product and textual information of the defective product, and the information of the inspection target includes an image of the inspection target and textual information requesting an inspection result. The estimation method includes: a pretraining step of performing pretraining on the large vision-language model by inputting a plurality of datasets, each dataset including one image and a sentence including preference information of a specific target person for the image, and a result output step of inputting an image of the estimation target object to the large vision-language model and causing the large vision-language model to output an estimation result regarding an individual's evaluation and a rationale for the determination. The preference information of the specific target person includes a determination as to whether or not the one image is preferred and textual information indicating a rationale for the determination.

## Description

### TECHNICAL FIELD

The present invention relates to a data processing method using a large vision-language model. In particular, the present invention relates to a method for training a large vision-language model using both image data and text data to present visual inspection of an article and a rationale for an inspection result.

### BACKGROUND ART

In recent years, large language models capable of document generation and machine translation have been developed by using a large amount of text data as input data and training neural networks having hundreds of millions of parameters using deep learning. Furthermore, multimodal models capable of handling a plurality of different types of data have been developed, having neural networks of a scale comparable to that of large language models. One of the multimodal models is a large vision-language model capable of simultaneously handling image data and text data. Current large vision-language models can generate outputs that take into account the relationships and interactions between image data and text data, and can perform data classification, identification, estimation of regularities contained in data, and the like.

As examples of large vision-language models, specific models are disclosed in Non Patent Literatures 1, 2, 3, 4, and 5. These large vision-language models utilize knowledge from large language models and map visual features into language space, thereby enabling vision-language tasks such as providing a description sentence (captioning) and answering a question about an image (visual question answering). The model disclosed in Non Patent Literature 2 learns alignment between image and language by converting the output of an image encoder into language space using a linear layer and inputting an embedding vector of an image and an embedding vector of a prompt into a large language model. Non Patent Literature 4 proposes a Querying Transformer that outputs relevant information in response to a query in order to learn alignment between image and language, thereby enabling a combination of a pretrained image encoder and a large language model.

One of the fields in which application of deep learning models is expected is visual inspection of products. So far, in order to automate visual inspection using deep learning, it has been necessary to collect data specialized for a single product to be an inspection target and to perform training. That is, in order to automate visual inspection of a product that has not been trained, it is necessary to retrain a model each time.

In addition, conventional deep learning models used for visual inspection are often trained using image data of non-defective products. Non Patent Literature 6 discloses PaDiM, which performs non-defective/defective determination using a feature map of a plurality of resolutions of a non-defective product image obtained from a pretrained model. Similarly to conventional deep learning models, PaDiM requires collection of training samples and model training for each inspection target product. The same model cannot be applied to a new product.

In recent years, methods for applying multimodal models to visual inspection by training the multimodal models using deep learning with input data including an image and language have been studied. A learning model called SAA disclosed in Non Patent Literature 7 is a deep learning model combining SAM of Non Patent Literature 8 and GroudingDINO of Non Patent Literature 9, and outputs a segmentation mask for a defect location and a defect mode in language in a zero-shot manner. SAA disclosed in Non Patent Literature 7 requires adjustment of hyperparameters for each product. AnomalyGPT disclosed in Non Patent Literature 10 can localize a defect by training a decoder using a non-defective product image, a pseudo-defective product image, and the corresponding language. However, AnomalyGPT requires training on a specific dataset. GPT-4V disclosed in Non Patent Literature 11 is considered as being capable of performing a certain level of non-defective/defective determination for a plurality of products in a visual inspection image dataset disclosed in Non Patent Literature 12 (Non Patent Literature 13).

In conventional visual inspection performed by an inspector, the inspector is provided with inspection criteria or limit samples of non-defective products and defective products, and performs inspection according to these criteria. If a learning method similar to the conventional visual inspection performed by inspectors is applied, it may be possible to perform a visual inspection of a different inspection target with a smaller amount of training data. An example of a model capable of applying a learning method similar to a skill acquisition method of an inspector in which inspection criteria are provided is in-context learning as disclosed in Non Patent Literature 14. In-context learning is a model that learns from a small number of given examples without updating model parameters and performs inference on unknown data. Non Patent Literature 15 discloses "Otter" as a large vision-language model capable of performing in-context learning. "Otter" is a large vision-language model obtained by performing additional training on a multimodal model "Open Flamingo" disclosed in Non Patent Literature 16 using in-context learning and datasets in an "Instruction Tuning" format disclosed in Non Patent Literatures 17 and 18. By performing such additional training, the large vision-language model becomes capable of executing, when exemplification is provided, a task corresponding to the example even for an unknown task. However, information learned by conventional large vision-language models is mostly general and easily obtainable information, and learning of knowledge or information in a specialized field is insufficient as compared with learning of general information. Therefore, it is currently difficult to perform non-defective/defective determination in visual inspection according to a specific determination criterion.

One expected aspect of utilizing large vision-language models is to present a reason for an inspection result. For example, as a technique for estimating a preference of a target person, Non Patent Literature 21 discloses an attempt to specifically express ambiguous preferences and values of a user by causing a language model to conduct a conversation with the target person. If general knowledge accumulated by a large vision-language model can be used to estimate a preference of an individual subject and present a rationale for the determination thereof, this may contribute to product development and improvement in user satisfaction with existing products.

### CITATIONS LIST

### Non Patent Literature

Non Patent Literature 1: Zhiliang Peng, Wenhui Wang, Li Dong, Yaru Hao, Shaohan Huang, Shuming Ma, Furu Wei, "Kosmos-2: Grounding Multimodal Large Language Models to the World" arXiv:2306.14824, November 20, 2023.
Non Patent Literature 2: Haotian Liu, Chunyuan Li, Qingyang Wu, Yong Jae Lee, "Visual Instruction Tuning" arXiv:2304.08485, 2023.
Non Patent Literature 3: Deyao Zhu, Jun Chen, Xiaoqian Shen, Xiang Li, Mohamed Elhoseiny, "MiniGPT-4: Enhancing Vision-Language Understanding with Advanced Large Language Models" arXiv:2304.10592, 2023.
Non Patent Literature 4: Junnan Li, Dongxu Li, Silvio Savarese, Steven Hoi, "BLIP-2: Bootstrapping Language-Image Pre-training with Frozen Image Encoders and Large Language Models" arXiv:2301.12597, 2023.
Non Patent Literature 5: Peng Xu, Wenqi Shao, Kaipeng Zhang, Peng Gao, Shuo Liu, Meng Lei, Fanqing Meng, Siyuan Huang, Yu Qiao, Ping Luo, "LVLM-eHub: A Comprehensive Evaluation Benchmark for Large Vision-Language Models" arXiv:2306.09265, 2023.
Non Patent Literature 6: Thomas Defard, Aleksandr Setkov, Angelique Loesch, and Romaric Audigier, "PaDiM: a Patch Distribution Modeling Framework for Anomaly Detection and Localization", in International Conference on Pattern Recognition (ICPR), pp. 475-489, Springer, 2021.
Non Patent Literature 7: Yunkang Cao, Xiaohao Xu, Chen Sun, Yuqi Cheng, Zongwei Du, Liang Gao, Weiming Shen, "Segment Any Anomaly without Training via Hybrid Prompt Regularization" arXiv:2305.10724, 2023.
Non Patent Literature 8: Alexander Kirillov, Eric Mintun, Nikhila Ravi, Hanzi Mao, Chloe Rolland, Laura Gustafson, Tete Xiao, Spencer Whitehead, Alexander C. Berg, Wan-Yen Lo, Piotr Dollar, Ross Girshick, "Segment Anything" arXiv:2304.02643, 2023.
Non Patent Literature 9: Shilong Liu, Zhaoyang Zeng, Tianhe Ren, Feng Li, Hao Zhang, Jie Yang, Chunyuan Li, Jianwei Yang, Hang Su, Jun Zhu, Lei Zhang, "Grounding DINO: Marrying DINO with Grounded Pre-training for Open-Set Object Detection" arXiv:2303.05499, 2023.
Non Patent Literature 10: Zhaopeng Gu, Bingke Zhu, Guibo Zhu, Yingying Chen, Ming Tang, Jinqiao Wang, "AnomalyGPT: Detecting Industrial Anomalies Using Large Vision-Language Models" arXiv:2308.15366, 2023.
Non Patent Literature 11: "OpenAI: GPT-4V(ision) System Card" https://cdn.openai.com/papers/GPTV_System_Card.pdf
Non Patent Literature 12: Paul Bergmann, Michael Fauser, David Sattlegger, Carsten Steger, "MVTec AD: A Comprehensive Real-World Dataset for Unsupervised Anomaly Detection", in Proceedings of the IEEE/CVF Conference on Computer Vision and Pattern Recognition (CVPR), pp. 9584-9592, 2019.
Non Patent Literature 13: Zhengyuan Yang, Linjie Li, Kevin Lin, Jianfeng Wang, Chung-Ching Lin, Zicheng Liu, Lijuan Wang, "The Dawn of LMMs: Preliminary Explorations with GPT-4V(ision)" arXiv:2309.17421, 2023.
Non Patent Literature 14: Tom B. Brown, Benjamin Mann, Nick Ryder, Melanie Subbiah, Jared Kaplan, Prafulla Dhariwal, Arvind Neelakantan, Pranav Shyam, Girish Sastry, Amanda Askell, Sandhini Agarwal, Ariel Herbert-Voss, Gretchen Krueger, Tom Henighan, Rewon Child, Aditya Ramesh, Daniel M. Ziegler, Jeffrey Wu, Clemens Winter, Christopher Hesse, Mark Chen, Eric Sigler, Mateusz Litwin, Scott Gray, Benjamin Chess, Jack Clark, Christopher Berner, Sam McCandlish, Alec Radford, Ilya Sutskever, Dario Amodei, "Language Models are Few-Shot Learners, Advances in neural information processing systems" (NeurIPS), Vol. 33, pp. 1877-1901, 2020.
Non Patent Literature 15: Bo Li, Yuanhan Zhang, Liangyu Chen, Jinghao Wang, Jingkang Yang, Ziwei Liu, "Otter: A Multi-Modal Model with In-Context Instruction Tuning" arXiv:2305.03726, 2023.
Non Patent Literature 16: Anas Awadalla, Irena Gao, Josh Gardner, Jack Hessel, Yusuf Hanafy, Wanrong Zhu, Kalyani Marathe, Yonatan Bitton, Samir Gadre, Shiori Sagawa, Jenia Jitsev, Simon Kornblith, Pang Wei Koh, Gabriel Ilharco, Mitchell Wortsman, Ludwig Schmidt, "OpenFlamingo: An Open-Source Framework for Training Large Autoregressive Vision-Language Models" arXiv:2308.01390, 2023.
Non Patent Literature 17: Jason Wei, Maarten Bosma, Vincent Y. Zhao, Kelvin Guu, Adams Wei Yu, Brian Lester, Nan Du, Andrew M. Dai, Quoc V. Le, "Finetuned Language Models Are Zero-Shot Learners" arXiv:2109.01652, 2022.
Non Patent Literature 18: Bo Li, Yuanhan Zhang, Liangyu Chen, Jinghao Wang, Fanyi Pu, Jingkang Yang, Chunyuan Li, Ziwei Liu, "MIMIC-IT: Multi-Modal In-Context Instruction Tuning" arXiv:2306.05425, 2023.
Non Patent Literature 19: Alec Radford, Jong Wook Kim, Chris Hallacy, Aditya Ramesh, Gabriel Goh, Sandhini Agarwal, Girish Sastry, Amanda Askell, Pamela Mishkin, Jack Clark, Gretchen Krueger, Ilya Sutskever, "Learning Transferable Visual Models From Natural Language Supervision", in International Conference on Machine Learning (PMLR), pp. 8748-8763, 2021.
Non Patent Literature 20: The MosaicML NLP Team, ed., "Introducing MPT-7B: A New Standard for Open-Source, Commercially Usable LLMs" https://www.mosaicml.com/blog/mpt-7b
Non Patent Literature 21: Belinda Z. Li, "Eliciting Human Preferences with Language Models" arXiv:2310.11589, 2023.
Non Patent Literature 22: Nils Reimers, Iryna Gurevych, "Sentence-BERT: Sentence Embeddings using Siamese BERT-Networks" arXiv:1908.10084, 2019.

### SUMMARY OF INVENTION

### TECHNICAL PROBLEMS

It is required to efficiently perform a visual inspection of various products using a large vision-language model. However, currently available large vision-language models have insufficient learning of expertise and inspection criteria corresponding to inspection target products. Therefore, in order to cause a large vision-language model to perform actual visual inspection, it is necessary to collect a large number of training samples for each inspection target product and to train the model.

The present invention has been made in view of such circumstances, and an object of the present invention is to provide a visual inspection method of an article using a large vision-language model that enables visual inspection of a wide variety of products with less training than before.

In addition, attempts to generate a rationale for a determination using a large vision-language model have hardly been made so far. For example, if it is possible to generate, as language, a rationale for a determination regarding "preference", which is one of the evaluations of an inspection target person, improvement in the explanatory possibility of a large vision-language model can be expected. In order to estimate an individual's preference using a large vision-language model, it is necessary to create a separate dataset for each individual and perform training using the dataset. However, conventionally, the dataset size for training a large vision-language model is enormous, resulting in a problem in that time and cost are required to create the dataset. In the step of creating a dataset for a target person, the burden on the target person increases.

One of the objects of the present invention is to provide an estimation method capable of generating, as language, an estimation result and a rationale for the determination thereof.

Therefore, in the present specification, a method for estimating a "preference", which is one of an individual's evaluations, and presenting a rationale for the estimation has been specifically studied.

### SOLUTIONS TO PROBLEMS

The present invention provides a method for performing a visual inspection of an article using a large vision-language model. A method for performing a visual inspection of an article according to the present invention includes: a pretraining step of performing pretraining on the large vision-language model by inputting information including an image and a sentence to consider context; an additional training step of performing additional training on the large vision-language model by inputting training information of a non-defective product group and training information of a defective product group for a plurality of articles; and an inspection step of inputting an appearance image of an inspection target to the large vision-language model and causing the large vision-language model to output an inspection result. The visual inspection method of an article according to the present invention is characterized in that the training information of the non-defective product group includes an appearance image of a non-defective product and textual information of the non-defective product, the training information of the defective product group includes an appearance image of a defective product and textual information of the defective product, and the information of the inspection target includes an image of the inspection target and textual information requesting an inspection result.

In the visual inspection method according to the present invention, the textual information of the non-defective product preferably includes a standard question sentence asking whether an article is a non-defective product or a defective product, and a standard answer sentence indicating that the article is a non-defective product.

The visual inspection method according to the present invention is characterized in that the textual information of the defective product includes a standard question sentence asking whether an article is a non-defective product or a defective product, a defect description sentence including a classification name of a defect, and a standard answer sentence indicating that the article is a defective product.

Further, the present invention presents a rationale for a determination of an estimation result by using a large vision-language model. As a specific example, a method for estimating "preference" which is an individual's evaluation includes a pretraining step and a result output step. In the pretraining step, pretraining is performed on the large vision-language model by inputting a plurality of datasets, each dataset including one image and a sentence including preference information of a specific target person for the image. In the result output step, the image of the estimation target object is input to the large vision-language model, and an estimation result regarding the individual's preference and a rationale for the determination are output. The method according to the present invention is characterized in that the preference information of the specific target person includes a determination as to whether or not the one image is preferred and textual information indicating the rationale for the determination.

In this specific example, the preference information of the specific target person is collected using an evaluation grid method, which is a registered trademark

### ADVANTAGEOUS EFFECTS OF INVENTION

The large vision-language model used in the visual inspection method of an article according to the present invention can execute inspection without collecting training samples and training the model for each different product after performing an additional training step with enhanced expertise. As a result, visual inspection can also be performed on other articles that have not been trained, and a more versatile visual inspection method capable of handling a wide variety of products can be provided.

The visual inspection method of an article according to the present invention can reduce processing required for training as compared with conventional methods when visual inspection of a plurality of types of articles is performed, thereby enabling efficient visual inspection of articles.

In the visual inspection method of an article according to the present invention, training information of a non-defective product group, training information of a defective product group, and information of an inspection target are each converted into an image and textual information, thereby enabling an inspection result indicating whether an article is a non-defective product or a defective product to be clearly output in text.

The estimation method according to the present invention can generate, as language, a rationale for a determination regarding an evaluation result. A rationale for the determination obtained as a result of estimation performed on an article can be used for product development and improvement of existing articles. In addition, clarification of evaluation criteria for performing sensory evaluation of an article becomes possible. A rationale for a determination regarding a preference output by using a large vision-language model can be utilized to improve the explanatory possibility of the large vision-language model itself.

Preference information of a specific target person used for learning in the estimation method according to the present invention can be collected using the evaluation grid method (registered trademark). Since the method according to the present invention can be performed more efficiently than in the conventional case, the burden on a specific target person cooperating in collection of preference information can be reduced.

### BRIEF DESCRIPTION OF DRAWINGS

Fig. 1 is a diagram illustrating an example of input information input to a large vision-language model for visual inspection of an article and output information of a result.
Fig. 2 is a diagram schematically illustrating a structure of a large vision-language model used in an embodiment of a visual inspection method of an article.
Fig. 3 is a diagram illustrating an example of images input in an additional training step for visual inspection of an article.
Fig. 4 is a photograph substituted for a drawing illustrating an example of images in which determination between a non-defective product and a defective product is difficult.
Fig. 5 is a diagram illustrating an example of textual information input together with an image of an inspection target and an example of textual information output as an inspection result.
Fig. 6 is a photograph substituted for a drawing illustrating an example of images used for learning in the visual inspection method of an article.
Fig. 7 is a diagram schematically illustrating a structure of a large vision-language model used in an embodiment of an estimation method.
Fig. 8 is a flowchart illustrating a method for creating a pretraining dataset in the embodiment of the estimation method.

### DESCRIPTION OF EMBODIMENT

Hereinafter, one embodiment of a visual inspection method of an article according to the present invention will be described with reference to the drawings. Note that the present embodiment is one example that embodies the invention and is not intended to limit the scope of the claims.

The large vision-language model in the present invention is a computer program capable of handling image data and document data simultaneously. The large vision-language model is trained using data that includes a large number of images and documents related thereto, and in the training process, numerous patterns and relationships are learned, thereby enabling appropriate analysis even for new data and problems.

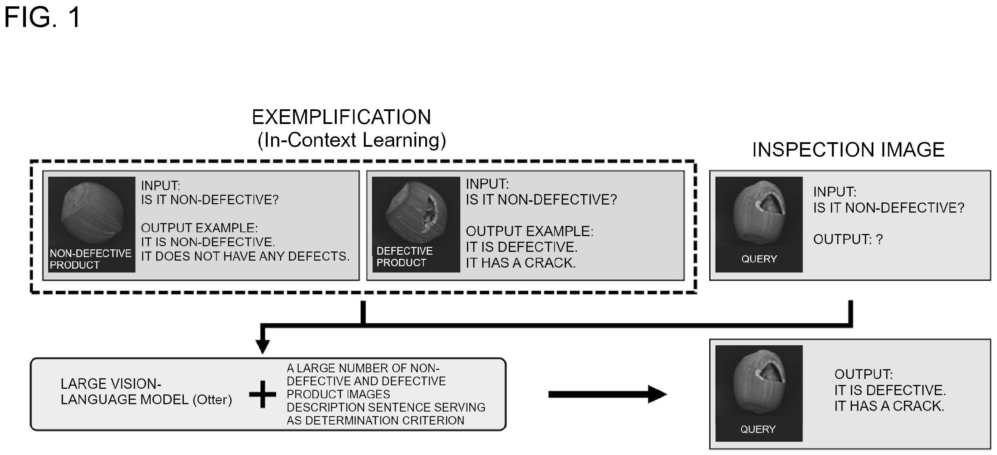

In the present embodiment, in addition to a conventional pretraining step for a large vision-language model, an additional training step using unique data is executed to enhance expertise regarding visual inspection. Further, in-context learning is performed on the large vision-language model. As a result, a general-purpose visual inspection model capable of performing a visual inspection even on a product that has not been trained is formed. Moreover, by unifying an output format of the large vision-language model, quantitative evaluation of visual inspection using the large vision-language model is enabled. Fig. 1 illustrates an example of input information input to a large vision-language model and output information of a result in an additional training step.

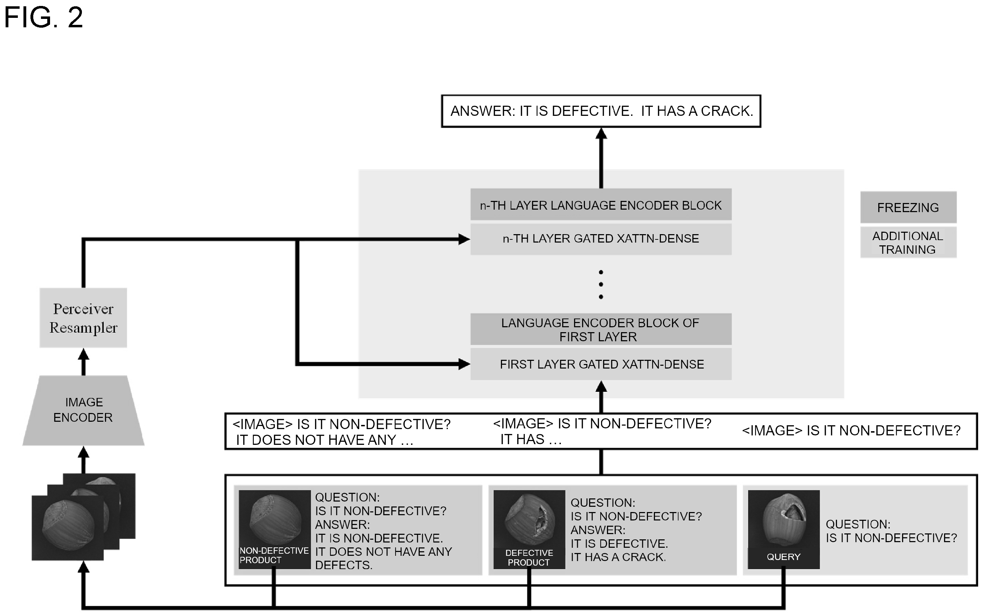

In the present embodiment, "Otter", a configuration of which is disclosed in Non Patent Literature 15, is used as a base model of the large vision-language model. An overview of the structure of the large vision-language model used in the present embodiment is illustrated in Fig. 2. The large vision-language model includes an image encoder for extracting image features, a language model for generating language, and a Perceiver Resampler for resampling data to connect the image encoder and the language model. The image encoder of the large vision-language model used in the present embodiment is CLIP ViT-L/14, the structure of which is disclosed in Non Patent Literature 19. The language model is MosaicML Pretrained Transformer 7B, the structure of which is disclosed in Non Patent Literature 20. During additional training, according to the configuration of the large vision-language model, the language model and the image encoder are frozen, and only parameters of the Perceiver Resampler, a cross-attention layer inserted into the language model, and input/output embeddings of the language model are updated. The total number of training parameters is approximately 1.3B (1.03 billion).

Hereinafter, data of images and textual information used in the additional training step of the present embodiment will be described. The additional training uses non-defective product images and defective product images of various products collected from the Web in order to enhance expertise related to visual inspection in a large vision-language model.

The collection of images used for additional training includes the following four steps.

(Step 1) Using the AI model "GPT-4 (OpenAI)", product names and textual information serving as inspection keywords for collecting non-defective product images and defective product images are generated. The textual information for inspection generated in the present embodiment were "non-defective product", "chip", "crack", "scratch", "cloudiness", "dirt", and "fading".

(Step 2) The generated textual information serving as the keywords is extended to eight languages.

(Step 3) Image search is performed on the Internet using the extended textual information serving the keywords, and images are collected.

(Step 4) Images for which the keywords match the scraped images and which have no restrictions on data use are visually selected.

Through Steps 1 to 4, images of various products are collected. Each product image was selected so as to include a non-defective product image and up to five defect mode images.

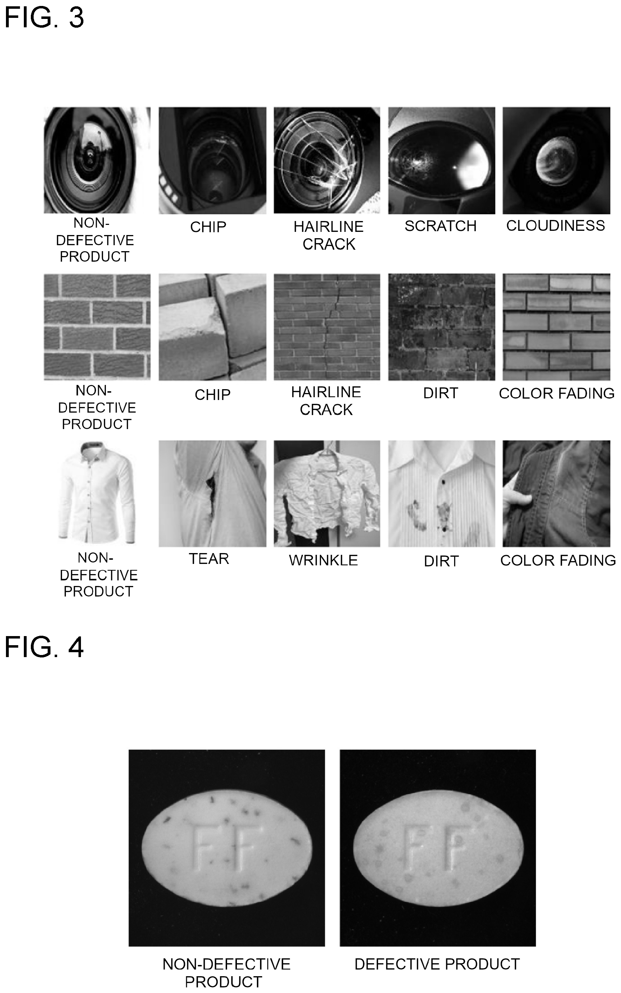

When a large vision-language model is trained with criteria for visual inspection, it may be difficult to distinguish whether an article is a non-defective product or a defective product based only on appearance images. An example of images in which determination between a non-defective product and a defective product is difficult is illustrated in Fig. 4. In the present embodiment, in order to improve the accuracy of visual inspection and enhance versatility to enable inspection of more articles, in-context learning is used. Specifically, a description sentence serving as a determination criterion is combined as textual information with each of the appearance image of a non-defective product and the appearance image of a defective product, and added as input data for additional training. An example of images used for additional training is illustrated in Fig. 3.

For use in the additional training step, images combined with textual information are divided into an exemplary image and an inspection image. Then, for each inspection image, one non-defective product image and one defective product image of the same product are selected from the exemplary images, and a set of three images including an exemplary non-defective product image, an exemplary defective product image, and an inspection image is created. Up to 25 such sets are created for each inspection image to extend the data. However, when the inspection image is of a defective product, the exemplary defective product image is selected from the exemplary images as an image to which textual information of the same defect of the same product is assigned.

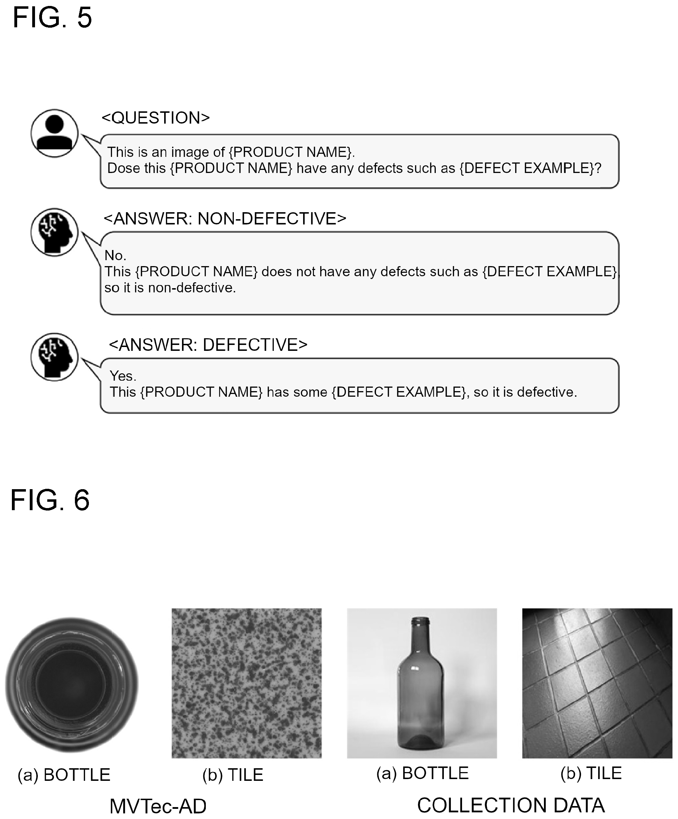

In the additional training step, by unifying the format of textual information input to and output from the large vision-language model, quantitative evaluation of non-defective/defective determination, which is the output of the visual inspection result, becomes possible. The content of a new dataset for unifying the input format and the output format will be described below with reference to Figs. 2 and 5.

The textual information serving as a question sentence for each image set in the present embodiment is: "This is {product name}. Does this have a defect called {defect example}?" As illustrated in Fig. 5, the textual information in the case of the English version is: "This is an image of {product name}. Does this {product name} have any defects such as {defect example}?" Thus, the question sentence includes textual information requesting an answer.

The textual information of the answer sentence in the case of the non-defective product image is: "No. This {product name} does not have {defect example}. It is a non-defective product." The textual information in the case of the English version is: "No. This {product name} does not have any defects such as {defect example}, so it is non-defective."

The textual information of the answer sentence in the case of the defective product image is: "Yes. This {product name} has {defect example}. It is a defective product." The textual information in the case of the English version is: "Yes. This {product name} has some {defect name}, so it is defective."

By performing additional training using textual information in which the format of the input question sentence and the format of the output answer sentence are unified, the large vision-language model becomes capable of clearly answering whether the product is a non-defective product or a defective product.

In the additional training step, first, additional training of the large vision-language model is performed using a non-defective product dataset and a defective product dataset in which the output format is unified. First, a question sentence corresponding to a first exemplary image is input, and an answer to the first exemplary image is predicted. Next, a question sentence and an answer sentence corresponding to the first exemplary image and a question sentence corresponding to a second exemplary image are input, and an answer to the second exemplary image is predicted. Finally, the question sentences and the answer sentences corresponding to the respective two exemplary images, and a question sentence corresponding to an inspection image, are input, and an answer to the inspection image is predicted. A loss is calculated using cross-entropy based on these three predicted answers and the correct answer.

The large vision-language model subjected to the above additional training step can be processed as a general-purpose visual inspection model that performs non-defective/defective determination on the inspection image input in the inspection step.

Next, as one of rationale-generative estimation methods according to the present invention, an embodiment of a method for estimating an individual's preference will be described with reference to the drawings.

Similarly to the visual inspection method of an article described above, "Otter" disclosed in Non Patent Literature 15 is used as the large vision-language model of the present embodiment. "Otter" is trained for the multimodal model "Open Flamingo" using both in-context learning and a dataset in an "Instruction Tuning" format, thereby learning general information. Furthermore, by performing additional pretraining using the dataset of the present embodiment described below, "Otter" becomes capable of estimating an individual's preference and generating a rationale for the estimation.

A method for creating a dataset used in the individual's preference estimation method of the present embodiment will be described. The dataset is created for each individual target person, that is, for a specific target person. In the present embodiment, the evaluation grid method is applied to creation of a dataset, and classification of a target object and extraction of a determination criterion of a specific target person are performed based on a preference of the specific target person.

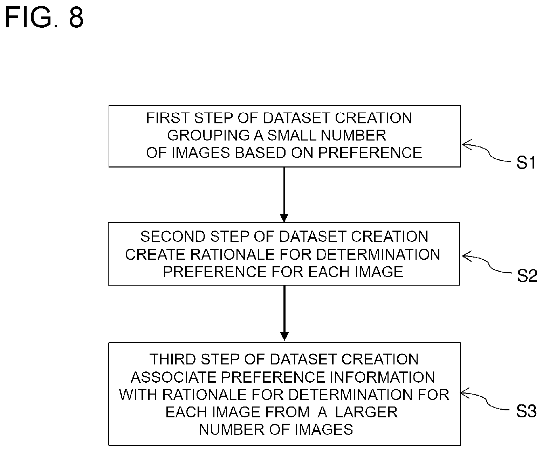

Fig. 8 illustrates a flowchart of a method for creating a pretraining dataset. In a first step (S1) of dataset creation, several tens of different images obtained by photographing a target object, a preference of which is desired to be estimated, are prepared. Then, the prepared images are presented to a specific target person, and the specific target person is caused to arrange the images in order of preference. After sorting is completed, the specific target person is caused to classify the images into two groups, a preferred group and a non-preferred group, based on his or her own preferences.

In a second step (S2) of dataset creation, the specific target person is interviewed regarding the reason for the classification based on the preference in the first step. The result of the interview is recorded as a rationale for the determination based on the preference. Through the second step (S2) of dataset creation, the rationale for the determination of the preference recognized by the specific target person can be extracted.

In a third step (S3) of dataset creation, hundreds of images obtained by photographing a target object in the same field as the images used in the first step and the second step are prepared. The prepared images are presented one by one to the specific target person, and for each image, the specific target person is asked to provide a determination as to whether or not the image is preferred and a reason indicating a rationale for the determination, which are then recorded. At this time, the determination of the preference as to whether or not the image is preferred is made by classifying the preference as "Yes" when the image is preferred and as "No" when the image is not preferred. The reason indicating the rationale for the determination is freely presented in the form of a word or text. The determination of the preference and the reason indicating the rationale for the determination are set as preference information of the specific target person. The preference information of the specific target person is recorded as textual information corresponding one-to-one with each image. The third step (S3) is performed such that the specific target person can appropriately confirm the image used in the second step, whereby fluctuations in the rationale for the determination can be suppressed.

Through the first step (S1) to the third step (S3) of dataset creation described above, a dataset necessary for additional pretraining of the large vision-language model is completed.

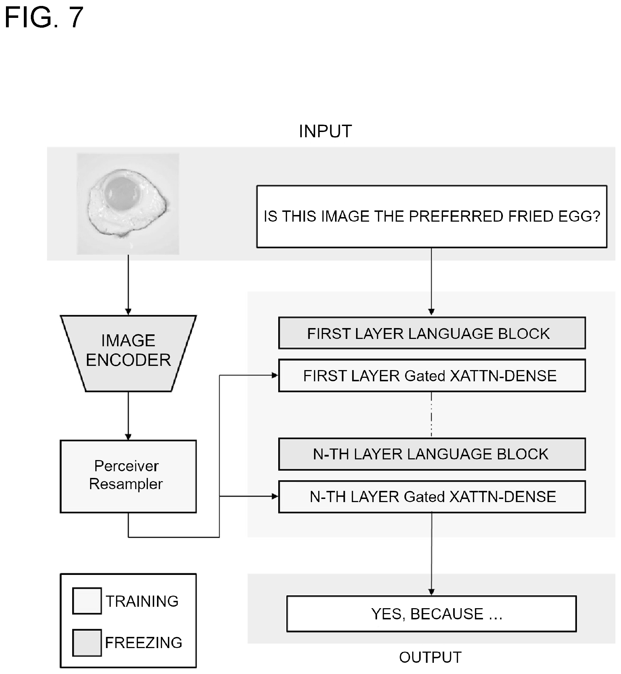

Fig. 7 schematically illustrates a structure of a large vision-language model used in the individual's preference estimation method of the present embodiment.

In the pretraining step, a text format of a question sentence input to the large vision-language model, and a text format of an estimation result regarding an individual's preference and a rationale for the determination output by the large vision-language model as an answer to the question, are unified.

The format of the question sentence input to the large vision-language model was "Is this image the preferred {target object}? Please answer with "Yes" or "No" first, and then provide a rationale for the determination." The format of the question sentence in the case of the English version was: "Is this image the preferred {object}? Please answer first with yes or no and then give the reason for your decision." As described above, the question sentence includes textual information requesting an answer.

The text format of the answer sentence output by the large vision-language model in response to the question was specified as: "Yes (or) No, because..." The format of the answer sentence in the case of the English version was specified as: "Yes/No, Because..."

For training, cross-entropy error between correct text and output text was used as an error function.

When an image of an estimation target object in the same field as the images used in pretraining is input to the large vision-language model on which the pretraining described above has been performed, an estimation result regarding an individual's preference and a rationale for the determination are output. The large vision-language model can output an answer in accordance with a text format specified in the pretraining.

### Experimental examples

Hereinafter, an experimental example in which visual inspection of an article was performed based on the method of the embodiment will be described. In the present experimental example, additional training was performed using images of 37 products collected from the Internet

The images of the 37 products used for additional training included non-defective product images and up to five defect mode images. A total of 4,693 images were collected and divided into training data and validation data at a ratio of 8:2. Among 3,738 training images, 1,834 images were used as exemplary images, and 1,904 images were used as inspection images. The images were extended into 43,943 image sets as training data. Input and output question sentences and answer sentences were prepared for each product name and defect name.

As image data of an article to be subjected to visual inspection, MVTec-AD (MVTec Software GmbH), which was a visual inspection image dataset, was used. From test data of each article, one non-defective product image and one exemplary defective product image for each defect mode were selected, all remaining test data were used as inspection images, and the inspection images were changed with respect to the exemplary images to perform the visual inspection. However, when the inspection image was of a defective product, the exemplary defective product image of the same defect mode was used. An accuracy rate was used as an evaluation index of inspection performance. The accuracy rate herein was calculated as a ratio in a case where a large vision-language model answers "Yes" or "No" to a question regarding an inspection image, and the answer was correct.

As a comparative example, the same visual inspection was also performed on a large vision-language model not subjected to the additional training step. As a result, the large vision-language model not subjected to the additional training step was unable to answer even a single question with "Yes" or "No", making quantitative evaluation impossible. As one example, the large vision-language model not subjected to the additional training step. output the following response for an input image of a defect mode "color anomaly" of "carpet": "This is a close-up image of a carpet, but it does not provide enough information to determine if the carpet has any specific defects."

In contrast, the large vision-language model subjected to the additional training step of the experimental example output answers in a consistent output format. Table 1 shows the accuracy of visual inspection results for the large vision-language model of the experimental example. In Table 1, not only determination between a non-defective product and a defective product but also an average value of output ratios of correct answers for a plurality of defect items is calculated and shown.

**[Table 1]**

| Accuracy rate of visual inspection using MVTec-AD as input image | |
|---|---|
| **Product** | **Accuracy rate** |
| **Carpet** | **0.97** |
| **lattice** | 0.83 |
| **Leather** | **0.99** |
| **Tile** | 0.52 |
| **Wood** | **0.93** |
| **Bottle** | 0.56 |
| **Cable** | 0.50 |
| **Capsule** | 0.62 |
| **Hazelnut** | 0.52 |
| **Metal nut** | 0.56 |
| **Tablet** | 0.51 |
| **Screw** | 0.61 |
| **Toothbrush** | 0.68 |
| **Transistor** | 0.55 |
| **Zipper** | 0.66 |

Table 2 shows, as an example, results of determination between a non-defective product and a defective product of "carpet" for each defect item.

**[Table 2]**

| Accuracy rate of defective image of "carpet" | | |
|---|---|---|
| **Exemplary defective product image** | **Inspection image** | **Accuracy rate** |
| **Color abnormality** | Non-defective product | 1.00 |
| **Color abnormality** | Color abnormality | 1.00 |
| **Cut** | Non-defective product | 0.96 |
| **Cut** | Cut | 1.00 |
| **Hole** | Non-defective product | 0.96 |
| **Hole** | Hole | 1.00 |
| **Metal contamination** | Non-defective product | 0.89 |
| **Metal contamination** | Metal contamination | 1.00 |
| **Frayed thread or thread contamination** | Non-defective product | 0.96 |
| **Frayed thread or thread contamination** | Frayed thread or thread contamination | 0.94 |

As shown in Table 1, particularly for "carpet", "leather", and "wood", the large vision-language model subjected to the additional training step performed non-defective/defective determination with high accuracy. For "carpet", "leather", and "wood", image data similar to images in MVTec-AD were included in image data collected from the Internet and used in the additional training step. For this reason, determination between a non-defective product and a defective product was considered to be possible with higher accuracy. For example, images of "leather" obtained from websites on the Internet for use in the additional training step are 26 non-defective product images and 52 defective product images. Although additional training was not performed using images of "leather" in MVTec-AD, highly accurate non-defective/defective determination with an accuracy rate of 0.99 was performed. (If additional training is performed using images in MVTec-AD, identical or similar images are used in all steps of pretraining, additional training, and exemplification, and thus a high accuracy rate is naturally expected.)

Furthermore, images of foreign material contamination, such as "metal contamination" and "frayed thread or thread contamination" of "carpet," which are unknown defect modes, were not present in the data of additional training, but non-defective/defective determination could be performed, and the general versatility of the large vision-language model of the present experimental example was confirmed.

On the other hand, for articles other than "carpet", "leather", and "wood", the large vision-language model output answers biased toward either "Yes" or "No", and in some cases, a sufficient non-defective/defective determination could not be performed. Among the evaluated articles, "bottle" and "tile" were included in the additional training data, but the accuracy of non-defective/defective determination was low. This is considered to be due to the fact that, as illustrated in Fig. 6, images of "bottle" and "tile" used as input data in the additional training step were significantly different from images of "bottle" and "tile" in MVTec-AD used for the actual visual inspection.

As described above, in order to improve the accuracy of visual inspection through the additional training step, it is important to input non-defective product images and defective product images of articles to be subjected to visual inspection as exemplification. In order to confirm the effectiveness of training in the additional training step, a comparison of visual inspection results was performed for "carpet", "grid", "leather", and "wood", between a case in which non-defective product images and defective product images corresponding to articles to be evaluated were used in the additional training and a case in which corresponding articles were not used in the additional training. For exemplification, one non-defective product image and one defective product image for each defect item were used.

Table 3 shows comparison evaluation results for "carpet". Table 4 shows comparison evaluation results for "grid". Table 5 shows evaluation results for "leather". Table 6 shows evaluation results for "wood".

**[Table 3]**

| Accuracy rates for visual inspection of carpet in cases with and without exemplification | | |
|---|---|---|
| **State of article in inspection image** | **Without exemplification** | **With exemplification** |
| **Non-defective product** | 0.81 | - |
| **Color abnormality** | 1.00 | 1.00 |
| **Cut** | 0.88 | 1.00 |
| **Hole** | 0.88 | 1.00 |
| **Metal contamination** | 0.88 | 1.00 |
| **Frayed thread or thread contamination** | 0.72 | 0.94 |

**[Table 4]**

| Accuracy rates for visual inspection of lattice in cases with and without exemplification | | |
|---|---|---|
| **State of article in inspection image** | **Without exemplification** | **With exemplification** |
| **Non-defective product** | 1.00 | - |
| **Bending** | 0.64 | 0.82 |
| **Damage** | 0.82 | 0.91 |
| **Residual Adhesive** | 0.40 | 0.60 |
| **Metal contamination** | 0.40 | 0.60 |
| **Frayed thread or thread contamination** | 0.40 | 0.40 |

**[Table 5]**

| Accuracy rates for visual inspection of leather in cases with and without exemplification | | |
|---|---|---|
| **Inspection image** | **Without exemplification** | **With exemplification** |
| **Non-defective product** | 1.00 | - |
| **Color abnormality** | 0.89 | 1.00 |
| **Cut** | 0.78 | 1.00 |
| **Crease** | 0.38 | 0.88 |
| **Residual Adhesive** | 0.56 | 1.00 |
| **Hole** | 0.82 | 1.00 |

**[Table 6]**

| Accuracy rates for visual inspection of wood in cases with and without exemplification | | |
|---|---|---|
| **Inspection image** | **Without exemplification** | **With exemplification** |
| **Non-defective product** | 0.81 | - |
| **Color abnormality** | 1.00 | 1.00 |
| **Hole** | 0.67 | 0.78 |
| **Liquid adhesion** | 0.89 | 0.89 |
| **Scratch** | 1.00 | 0.95 |

As shown in Tables 3 to 6, the large vision-language model of the present experimental example correctly output the results of the visual inspection when both non-defective product images and defective product images of articles to be subjected to visual inspection were input as exemplification. In the case of non-defective products, the calculation methods differ between a case with exemplification and a case without exemplification, so that a simple comparison cannot be made, and thus the accuracy rate is not described.

As described above, it was confirmed that the large vision-language model of the present experimental example can perform a visual inspection with higher accuracy than in the conventional case and more efficiently with less training by performing a unique additional training step.

Hereinafter, an experimental example will be described in which, based on the method of the embodiment, estimation of "preference", which is one type of individual's evaluation, and generation of a rationale for the estimation were performed, and the accuracy and quality of the output result were evaluated.

In the present experimental example, the target object for preference estimation was set as a "fried egg". In addition, "Otter" was used as the large vision-language model.

In this case, the number of individual target persons to be subjected to preference estimation, that is, specific target persons, was five. As images of the fried egg, which is the target object, the same images were used for all the specific target persons.

A pretraining dataset was created in accordance with the flowchart of Fig. 8. In a first step (S1), 30 images of fried eggs were prepared and classified based on the preferences of the specific target persons. In a second step (S2), for each of the 30 images, a determination as to whether or not the fried egg was preferred and a rationale for the determination were collected and recorded as text data. In a third step (S3), 200 images of fried eggs different from those in the second step (S2) were prepared, and for each fried egg, a preference determination as to whether or not the fried egg was preferred and a rationale for the determination were collected from the specific target persons. A dataset including an image and textual information was obtained by associating the collected preference determinations and rationales for the determination with each image as preference information.

The first step (S1) to the third step (S3) were performed for each of the five specific target persons. As a result, for each specific target person, 200 datasets including images and textual information were obtained.

Among the 200 sets of images and preference information, 120 sets were used in the pretraining step of the large vision-language model. Thirty sets of images and preference information were used for validation. Then, 50 images not used for pretraining and validation were input to the large vision-language model to generate a preference estimation result and a rationale for the determination.

The quality and accuracy of the method according to the present invention were evaluated by taking the preference information associated with the images as correct answers and comparing the similarity between the output result generated by the large vision-language model and the preference information.

Since the individual's preference is not limited to a single correct answer, evaluation of the quality and accuracy of the large vision-language model is more difficult than in the conventional case. Therefore, in order to evaluate the accuracy of the estimation results, in addition to BLEU (Bilingual Evaluation Understudy) scores and Rouge-L (Recall-Oriented Understudy for Gisting Evaluation), which are conventionally known document similarity evaluation indices, evaluation using Sentence BERT disclosed in Non Patent Literature 22 and human evaluation were performed. Sentence BERT is a natural language processing model capable of comparing the content of two sentences with high accuracy.

In the human processing, a criterion was established such that, when an element of a rationale for a determination a correct answer is included in the rationale for the determination output by the large vision-language model, an evaluation score is assigned based on the proportion of the included elements of the rationale for the determination the correct answer even if the preference estimation result is incorrect, and scoring was performed such that a score of 1 is assigned when all elements of the rationale for the determination the correct answer are included, and a score of 0 is assigned when none of the elements are included.

Table 7 below shows the results of evaluating the accuracy rates of the preference estimation results by the large vision-language model and the quality and accuracy of the rationales for the determination using four types of evaluation: BLEU score, ROUGE-L, Sentence BERT, and human evaluation.

**[Table 7]**

| | Accuracy rate for yes/no preference determination [%] | Sentence BERT | BLEU | Rouge -L | Human evaluation |
|---|---|---|---|---|---|
| Specific target person 1 | 74.0 | 0.929 | 0.59 1 | 0.607 | 0.529 |
| Specific target person 2 | 90.0 | 0.896 | 0.44 7 | 0.504 | 0.466 |
| Specific target person 3 | 94.0 | 0.943 | 0.63 3 | 0.657 | 0.555 |
| Specific target person 4 | 86.0 | 0.920 | 0.53 9 | 0.645 | 0.404 |
| Specific target person 5 | 88.0 | 0.885 | 0.47 5 | 0.517 | 0.386 |

As a result of the evaluation, it was confirmed that the preference determination as to whether or not a specific target person considers the object preferable could be estimated with generally good accuracy. In addition, regarding the rationales for the determination, the similarity by Sentence BERT was approximately 0.9 for all respondents, which is a very high value, and it was confirmed that high-quality rationales for the determination can be generated as a result of performing the pretraining step. As supporting evidence, the evaluation values by human evaluation ranged from 0.386 to 0.555, and it was confirmed that elements of the correct rationales for the determination were generated at a proportion of slightly less than 40% to slightly more than 50%.

From the above, it was clarified that the method for estimating an individual's preference for an estimation target object using the large vision-language model in the present experimental example can generate an individual's preference and a rationale for the determination with high accuracy through pretraining using 120 sets.

### INDUSTRIAL APPLICABILITY

By applying the visual inspection method of an article according to the present invention, it is possible to efficiently identify a non-defective product and a defective product using a large vision-language model.

By applying the rationale-generative estimation method according to the present invention, it is possible to estimate an individual's opinion regarding a target object using a large vision-language model and improve the article so that the article is more preferred.

In addition, by applying the rationale-generative estimation method according to the present invention, it is possible to perform sensory inspection of an article, which has conventionally been performed by an operator, using a large vision-language model. By classifying a non-defective product into "Yes" indicating a determination of preference, classifying a defective product into "No" indicating a determination of non-preference, and creating a dataset by associating rationales for the determinations with the classifications, it becomes possible to estimate whether the target object is a non-defective product or a defective product.

## Claims

1. A visual inspection method for performing a visual inspection of an article using a large vision-language model, the method comprising:
a pretraining step of performing pretraining on the large vision-language model by inputting information including an image and a sentence to consider context;
an additional training step of performing additional training on the large vision-language model by inputting training information of a non-defective product group and training information of a defective product group for a plurality of articles; and
an inspection step of inputting an appearance image of an inspection target to the large vision-language model and causing the large vision-language model to output an inspection result,
wherein
the training information of the non-defective product group includes an appearance image of a non-defective product and textual information of the non-defective product,
the training information of the defective product group includes an appearance image of a defective product and textual information of the defective product, and
information of the inspection target includes an image of the inspection target and textual information requesting an inspection result.

2. The visual inspection method according to claim 1, wherein the textual information of the non-defective product includes
a standard question sentence asking whether an article is a non-defective product or a defective product, and
a standard answer sentence indicating that the article is a non-defective product.

3. The visual inspection method according to claim 1, wherein the textual information of the defective product includes
a standard question sentence asking whether an article is a non-defective product or a defective product,
a defect description sentence including a classification name of a defect, and
a standard answer sentence indicating that the article is a defective product.

4. A rationale-generative estimation method for estimating an evaluation of an estimation target object and a reason for the estimation by using a large vision-language model, the rationale-generative estimation method comprising:
a pretraining step of performing pretraining on the large vision-language model by inputting a plurality of datasets, each of the datasets including one image and a sentence including evaluation information of a specific target person for the image; and
a result output step of inputting an image of the estimation target object to the large vision-language model and causing the large vision-language model to output an estimation result regarding evaluation of an individual and a rationale for the determination,
wherein the evaluation information of the specific target person includes a determination as to whether the one image is preferred and textual information indicating a rationale for the determination.

5. The estimation method according to claim 4, wherein the evaluation information of the specific target person is collected using an evaluation grid method, which is a registered trademark.
